# EUROPEAN PATENT APPLICATION

(11) **EP 4 749 121 A1**
(43) Date of publication of application: **27.05.2026**
(21) Application number: 25217090.7
(22) Date of filing: 19.11.2025
(51) Int. Cl.: F03D 13/25, F03D 17/00, F16F 7/10

(54) **A JACKET PLATFORM AND AN OFFSHORE WIND POWER STRUCTURE**

(30) Priority: 25.11.2024 CN 202411693128
(71) Applicant: SHANGHAI INVESTIGATION, DESIGN & RESEARCH INSTITUTE CO., LTD., Shanghai 200434 (CN); Chongqing University, Shapingba, Chongqing 400000 (CN)
(72) Inventor: HUANG, Jun, SHANGHAI 200434 (CN); ZHANG, Lixian, SHANGHAI 200434 (CN); WANG, Liji, SHANGHAI 200434 (CN); WANG, Yuhang, SHANGHAI 200434 (CN); ZHANG, Xiao, SHANGHAI 200434 (CN); CHENG, Wanpeng, SHANGHAI 200434 (CN); WANG, Xuedi, SHANGHAI 200434 (CN); LIU, Ziang, SHANGHAI 200434 (CN); YIN, Xilong, SHANGHAI 200434 (CN); YU, Yu, SHANGHAI 200434 (CN)
(74) Representative: Groth & Co. KB

(57) **Abstract**

The present invention relates to the technical field of offshore wind power equipments and discloses a jacket platform and an offshore wind power structure. The jacket platform of the present invention comprises a frame body and a damping and vibration-reducing device; wherein the damping and vibration-reducing device comprises a shell, a damper, a displacement amplification assembly and a connection assembly; the shell is hinged on a top of the frame body; the damper and the displacement amplification assembly are arranged in the shell, and the damper is connected with a power output end of the displacement amplification assembly; the connection assembly comprises a plurality of connection cables; one end of each connection cable is connected with a power input end of the displacement amplification assembly, and the other end of each connection cable extends out of the shell and is connected to the frame body, and every two adjacent connection cables are arranged to have an included angle therebetween. The damping and vibration-reducing device in this jacket platform can realize displacement amplification, enabling the damper to give full play to its vibration-reducing effect, and moreover, it can achieve vibration reduction in multiple directions, thus having a good vibration-reducing effect and being suitable for use in the complex sea-current load environment of the ocean.

## Description

### TECHNICAL FIELD

The present invention relates to the technical field of offshore wind power equipments, and specifically relates to a jacket platform and an offshore wind power structure.

### BACKGROUND

As one of the renewable energy sources with the most abundant reserves, wind energy exploitation has become one of the key targets for renewable energy exploitation in recent years. Compared with onshore wind energy resources, China has more abundant offshore wind energy resources. According to statistics, the total reserves of wind energy resources within 50 meters of China's offshore areas are 883 million kilowatts, and the technically exploitable amount thereof is 570 million kilowatts. Compared with onshore wind power, offshore wind power exploitation has the advantages of saving land resources, high wind speed, and being close to the electricity load consumption center. Therefore, offshore wind power exploitation has become an important direction for the development of China's wind energy industry. With the continuous improvement of offshore wind energy resource exploitation, exploitation of offshore wind energy resources is gradually shifting from nearshore shallow water to transitional water depths (30-60 meters). In transitional water depths, the single-pile offshore wind power support structure is no longer applicable due to problems such as structural instability and a sharp increase in costs. However, the offshore wind power support structure in the form of a jacket platform has the advantages of convenient installation and reasonable economic costs in transitional water depths, and has gradually become the best choice for offshore wind power exploitation in transitional water depths.

With the increase of water depth, the structural design size of offshore wind turbine units continues to increase, and the wave and sea current loads acting on the jacket platform increase significantly, which further increases the vibration of the jacket platform structure. In addition, the frequency range of marine environmental loads is wide, which can also cause the resonance response of the jacket platform structure. The vibration response of the jacket platform will adversely affect its support stability. At present, the ways to reduce the vibration response of the jacket platform are as follows: increasing the structural stiffness of the jacket platform, but this method will also increase the production cost and reduce the economic benefits; adding dampers (such as tuned mass dampers) at positions with large deformations such as the top and middle of the wind turbine tower, but it is difficult for the dampers to give full play to their vibration-reducing effect when the deformation is small. Moreover, most dampers can only reduce vibration in one direction with a single degree of freedom, which cannot meet the needs of use in the complex sea-current load environment of the ocean, resulting in a poor vibration-reducing effect.

### SUMMARY OF THE INVENTION

In view of this, the present invention provides a jacket platform and an offshore wind power structure to solve the problem that it is difficult for the existing dampers to give full play to their vibration-reducing effect when the vibration deformation of the jacket platform is small, and can only reduce vibration in one direction with a single degree of freedom, which cannot meet the needs of use in the complex sea-current load environment of the ocean, resulting in a poor vibration-reducing effect.

In the first aspect, the present invention provides a jacket platform, which comprises:
a frame body;
a damping and vibration-reducing device, wherein the damping and vibration-reducing device comprises a shell, a damper, a displacement amplification assembly and a connection assembly; the shell is hinged on a top of the frame body; the damper and the displacement amplification assembly are arranged in the shell, and the damper is connected with a power output end of the displacement amplification assembly; the connection assembly comprises a plurality of connection cables; one end of each connection cable is connected with a power input end of the displacement amplification assembly, and the other end of each connection cable extends out of the shell and is connected to the frame body; and every two adjacent connection cables are arranged to have an included angle therebetween.

### Beneficial Effects

When the jacket platform is affected by sea-current loads such as waves, it will produce a vibration response. When the frame body of the jacket platform vibrates, it will drive the connection cables to move, so that the connection cables exert an acting force on the displacement amplification assembly. The displacement amplification assembly amplifies the small displacement generated when the frame body vibrates and then transmits the amplified displacement to the damper, and the damper performs buffering and vibration reduction. The damping and vibration-reducing device can amplify the displacement, enabling the damper to give full play to its vibration-reducing effect. In addition, the connection cables extend out of the shell from different directions and are connected to the frame body, so that vibration reduction in multiple directions with multiple degrees of freedom can be achieved, resulting in a good vibration-reducing effect and being suitable for use in the complex sea-current load environment of the ocean.

In an optional embodiment, the shell is hinged to the top of the frame body by means of a spherical bearing.

### Beneficial Effects

After the shell is hinged with the spherical bearing, the damping and vibration-reducing device can rotate in the corresponding direction when the frame body vibrates, so as to realize vibration reduction in multiple directions with multiple degrees of freedom.

In an optional embodiment, the displacement amplification assembly comprises a first gear, a second gear and a rack; the first gear and the second gear are coaxially connected; the first gear is connected to the connection cables; the second gear is meshed with the rack; the rack is connected to the damper; and a diameter of the first gear is smaller than that of the second gear.

### Beneficial Effects

When the frame body vibrates, it will drive the connection cables to move, and the movement of the connection cables will drive the first gear to rotate. Since the first gear is a small gear and the second gear is a large gear, the displacement amplification can be realized, enabling the damper to undergo a large deformation, so that the damper can better play its vibration-reducing role.

In an optional embodiment, the rack is arranged along a length direction of the shell, and axial directions of both the first gear and the second gear are arranged along a height direction of the shell.

In an optional embodiment, the connection assembly comprises four connection cables, and the included angle between every two adjacent connection cables is 90°.

In an optional embodiment, the connection cables are chains.

### Beneficial Effects

The connection cables are preferably chains, which can better mesh with the first gear and drive the first gear to rotate.

In an optional embodiment, the top of the frame body is provided with a vibration-reducing support.

### Beneficial Effects

When a strong earthquake or other severe quakes occur, the vibration-reducing support can effectively reduce vibrations in the vertical direction.

In an optional embodiment, the frame body comprises support piles, connection columns and diagonal braces; there are four support piles symmetrically arranged on the seabed in pairs; a connection column is arranged on each support pile; and a diagonal brace is arranged between every two adjacent connection columns.

In an optional embodiment, a diameter of the connection column increases from top to bottom.

In the second aspect, the present invention also provides an offshore wind power structure, comprising the above-mentioned jacket platform, an adapter seat and a wind turbine tower; wherein the adapter seat is arranged on the frame body; and the wind turbine tower is arranged on the adapter seat.

### Beneficial Effects

Since the offshore wind power structure comprises the jacket platform, it has the same effects as the jacket platform, which will not be repeated here.

### BRIEF DESCRIPTION OF THE DRAWINGS

To more clearly illustrate the technical solutions in the specific implementations of the present invention or in the prior art, the drawings that are needed for describing the specific implementations or the prior art are briefly introduced below. Apparently, the drawings described below only represent some implementations of the present invention, and those skilled in the art can obtain other drawings from these drawings without creative efforts.
FIG. 1 is a schematic diagram of the offshore wind power structure of the present invention;
FIG. 2 is a partially enlarged schematic diagram of part A in FIG. 1;
FIG. 3 is a top view of the damping and vibration-reducing device in the offshore wind power structure of the present invention.

### Reference numerals:

1, frame body; 11, support pile; 12, connection column; 13, diagonal brace;
2, damping and vibration-reducing device; 21, shell; 22, damper; 23, displacement amplification assembly; 231, first gear; 232, second gear; 233, rack; 24, connection cable; 25, connection rod;
3, spherical bearing;
4, vibration-reducing support;
5, adapter seat;
6, wind turbine tower.

### DETAILED DESCRIPTION

The technical solutions of the present invention will be clearly and completely described below with reference to the accompanying drawings, and apparently, the described embodiments only represent part of the embodiments of the present invention, not all of them. Based on the embodiments described in the present invention, all other embodiments obtainable by those skilled in the art without creative work fall within the scope of protection of the present invention.

In the description of the present invention, it should be noted that the terms such as "center", "upper", "lower", "left", "right", "vertical", "horizontal", "inside", "outside" indicate orientations or positional relationships based on those shown in the drawings, and are only for convenience of describing the present invention and simplifying the description, rather than indicating or implying that the device or element referred to must have a specific orientation, or must be constructed and operated in a specific orientation. Therefore, they should not be construed as limiting the present invention. Additionally, terms "first", "second", and "third" are used for descriptive purposes only and should not be construed as indicating or implying relative importance.

In the description of the present invention, it should be noted that, unless otherwise clearly specified and defined, the terms "installation", "connect with" and "connect to" should be understood in a broad sense. For example, they may refer to a fixed connection, a detachable connection, or an integral connection; they may refer to a mechanical connection or an electrical connection; they may be directly connected or indirectly connected through an intermediate medium; they may be an internal communication between two elements. Those of ordinary skill in the art can understand the specific meanings of the above terms in the present invention according to specific circumstances.

In addition, the technical features involved in the different embodiments of the present invention described below can be combined with each other as long as there is no conflict between them.

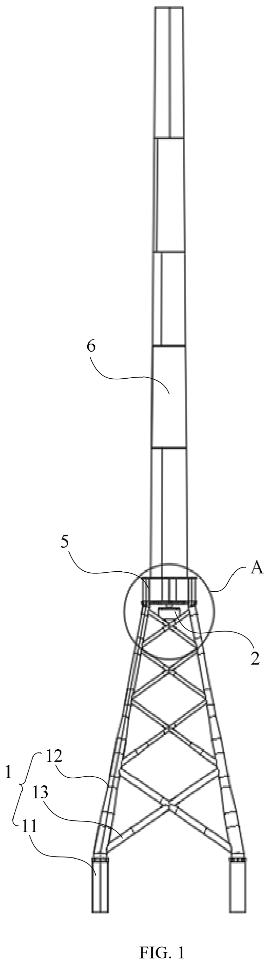

The embodiments of the present invention will be described below with reference to FIGS. 1-3.

According to an embodiment of the present invention, in the first aspect, a jacket platform is provided, which comprises a frame body 1 and a damping and vibration-reducing device 2. The damping and vibration-reducing device 2 comprises a shell 21, a damper 22, a displacement amplification assembly 23 and a connection assembly. The shell 21 is hinged on the top of the frame body 1. The damper 22 and the displacement amplification assembly 23 are arranged in the shell 21, and the damper 22 is connected with a power output end of the displacement amplification assembly 23. The connection assembly comprises a plurality of connection cables 24. One end of each connection cable 24 is connected with a power input end of the displacement amplification assembly 23, and the other end of each connection cable 24 extends out of the shell 21 and is connected to the frame body 1, and every two adjacent connection cables 24 are arranged to have an included angle therebetween.

The jacket platform can be used as the support foundation of an offshore wind turbine, wherein the frame body 1 is the steel structure support main body. When the frame body 1 is arranged in the sea, it will be affected by sea-current loads such as waves and thus produce a vibration response. Under normal operating conditions, the vibration of the frame body 1 is mainly vibration in directions in the horizontal plane, but this vibration is not in a single direction, but may be in any direction in the horizontal plane. The hinged connection between the shell 21 and the frame body 1 is equivalent to a hinged connection between the entire damping and vibration-reducing device 2 and the frame body 1. When the frame body 1 vibrates, the damping and vibration-reducing device 2 will rotate accordingly. At this time, since one end of the connection cable 24, which is fixedly connected with the frame body 1, is constrained, the other end thereof will exert an acting force on the power input end of the displacement amplification assembly 23. The displacement amplification assembly 23 can amplify the small deformation generated when the frame body 1 vibrates, and then the power output end of the displacement amplification assembly 23 exerts an acting force on the damper 22 to make the damper 22 deform for vibration reduction. The deformation amount of the damper 22 after the amplification of the displacement amplification assembly 23 is larger than that of the frame body 1 when it vibrates.

The jacket platform can reduce vibration when the frame body 1 vibrates by providing the damping and vibration-reducing device 2, thus improving the stability of the jacket platform. Since the deformation of the frame body 1 when it vibrates is small, if it is directly transmitted to the damper 22, the vibration-reducing effect of the damper 22 will be adversely affected. Therefore, the displacement amplification assembly 23 in the damping and vibration-reducing device 2 is needed to amplify the displacement, so as to amplify the small deformation of the frame body 1 when it vibrates and then transmit the amplified displacement to the damper 22. The damper 22 can therefore have a larger deformation amount, thus giving full play to its vibration-reducing effect. The action direction of the wave sea-current load is any direction in the sea level, and the shell 21 is hinged with the frame body 1. Therefore, when the frame body 1 vibrates in any direction, the shell 21 can rotate accordingly. In addition, a plurality of connection cables 24 extend out of the shell 21 from different directions and are connected to the frame body 1. When the shell 21 rotates in any direction, the corresponding connection cables 24 will exert an acting force on the displacement amplification assembly 23, so as to realize multi-direction vibration reduction, meet the use requirements of the jacket platform for complex and diverse wave sea-current loads in the marine environment, and have a good vibration-reducing effect.

Furthermore, the interior of the shell 21 in the damping and vibration-reducing device 2 has an installation cavity, which provides an installation space for the arrangement of the damper 22, the displacement amplification assembly 23 and the connection assembly, and at the same time, it can also prevent seawater from splashing onto the damper 22 and the displacement amplification assembly 23to cause rusting of the parts in the damper 22 and the displacement amplification assembly 23, which would otherwise lead to the operation failure of the damping and vibration-reducing device 2.

The damper 22 is preferably a viscous damper 22. The viscous damper 22 is made based on the principle that fluid will produce throttling resistance when passing through a throttle hole according the hydrodynamic principle. It is a damper 22 related to the piston movement speed. It drives the flow of the internal damping medium by means of the reciprocating movement of the piston, and thus produces a damping effect to convert kinetic energy into heat energy for dissipation.

In one embodiment, the displacement amplification assembly 23 comprises a first gear 231, a second gear 232 and a rack 233; the first gear 231 and the second gear 232 are coaxially connected; the first gear 231 is connected to the connection cables 24; the second gear 232 is meshed with the rack 233; the rack 233 is connected to the damper 22; a diameter of the first gear 231 is smaller than that of the second gear 232.

The first gear 231 is the power input end of the displacement amplification assembly 23. When the frame body 1 vibrates and drives the positions of the connection cables 24 to change, the connection cables 24 will drive the first gear 231 to rotate. The first gear 231 and the second gear 232 are coaxially connected, that is, they rotate synchronously. However, since the first gear 231 is a small gear and the second gear 232 is a large gear, the second gear 232 can amplify the displacement that is input to the first gear 231. The rack 233 is the power output end of the displacement amplification assembly 23. The rack 233 is connected to the damper 22 through a connection rod 25. When the second gear 232 rotates, it drives the rack 233 to translate, and the translation movement of the rack 233 further drives the damper 22 to deform to consume the vibration energy for vibration reduction.

The displacement amplification assembly 23 can convert the small deformation of the frame body 1 when it vibrates into a large deformation of the damper 22, so as to give full play to the vibration-reducing performance of the damper 22. At the same time, it can convert the rotational movements exerted on the first gear 231 by the connection cables 24 in all directions into the translation movement of the rack 233, thereby causing the damper 22 to deform to realize vibration reduction.

In one embodiment, the rack 233 is arranged along a length direction of the shell 21, and axial directions of both the first gear 231 and the second gear 232 are arranged along a height direction of the shell 21.

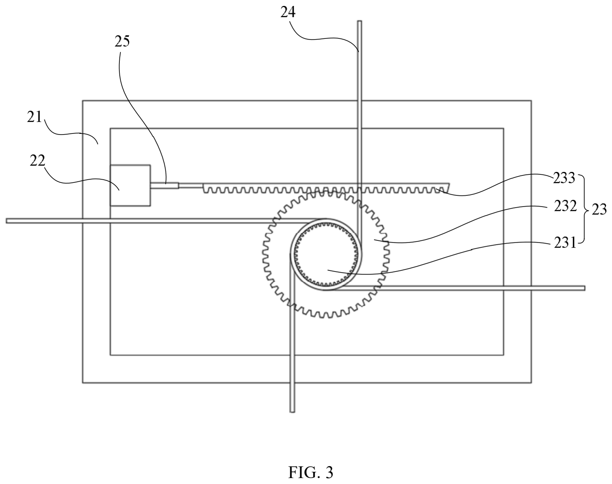

As shown in FIG. 3, the shell 21 is in the shape of a cuboid. The rack 233 in the displacement amplification assembly 23 is arranged along the length direction of the shell 21, that is, the movement direction of the rack 233 is along the length direction of the shell 21. Correspondingly, the damper 22 is arranged on the left inner wall or the right inner wall of the shell 21. In this embodiment, the damper 22 is arranged on the left inner wall of the shell 21. The left end of the rack 233 is connected to the damper 22 through a connection rod 25, and one side of the rack 233 has a toothed structure that meshes with the second gear 232. The second gear 232 is located on the front side of the rack 233 and meshes with the rack 233, and its axial direction is along the height direction of the shell 21. The first gear 231 and the second gear 232 are coaxially arranged, so the axial direction of the first gear 231 is also along the height direction of the shell 21.

In other embodiments, the damper 22 can also be arranged on the right inner wall of the shell 21.

In other embodiments, the damper 22 can also be arranged on the front inner wall or the rear inner wall of the shell 21.

In other embodiments, there may be a plurality of the second gears 232, and all the second gears 232 are coaxially connected. Correspondingly, an equal number of racks 233 and dampers 22 need to be provided.

In one embodiment, the connection assembly comprises four connection cables 24, and the included angle between every two adjacent connection cables 24 is 90°.

The four connection cables 24 extend out from the front side, the rear side, the left side and the right side of the shell 21 respectively, and all the four connection cables 24 are perpendicular to the corresponding sides. The ends of the four connection cables 24 extending out of the shell 21 are all connected to the connection columns 12 of the frame body 1, and the ends of the four connection cables 24 located inside the shell 21 are all connected to the first gear 231. When the frame body 1 vibrates, the shell 21 will rotate around a spherical bearing 3, and the four connection cables 24 will also act accordingly to drive the first gear 231 to rotate. The rotation direction and rotation angle of the first gear 231 depend on the vibration direction of the frame body 1 and the deformation amount when vibrating. The four connection cables 24 arranged in four directions can respond to the vibration of the frame body 1 in any direction.

In other embodiments, the included angle between every two adjacent connection cables 24 can be an acute angle or an obtuse angle.

In other embodiments, there may be only two connection cables 24. For example, one connection cable 24 extends out from the left side of the shell 21, and the other connection cable 24 extends out from the front side of the shell 21.

In one embodiment, the connection cables 24 are chains.

The connection cables 24 are preferably chains, which can better mesh with the toothed structure on the first gear 231.

In other embodiments, the first gear 231 can also be replaced by a disc without teeth. At this time, the connection cables 24 can be ordinary ropes instead of chains, and their end portions are wound around the disc, which can also drive the disc to rotate.

In one embodiment, the frame body 1 comprises support piles 11, connection columns 12 and diagonal braces 13; There are four support piles 11 symmetrically arranged on the seabed in pairs; a connection column 12 is arranged on each support pile 11; and a diagonal brace 13 is arranged between every two adjacent connection columns 12.

The four support piles 11 are rammed into the seabed and arranged symmetrically in pairs, approximately at the four corners of a square. A connection column 12 is arranged on each support pile 11, and the connection mode between the support piles 11 and the connection columns 12 is welding. The four connection columns 12 are arranged obliquely, that is, the shape enclosed by the four connection columns 12 is approximately a quadrangular frustum, with a small top size and a large bottom size. A plurality of diagonal braces 13 are arranged between every two adjacent connection columns 12, that is, on each side of the quadrangular frustum. The diagonal braces 13 are arranged crosswise in pairs and the pairs are spaced apart along the axial direction of the connection columns 12.

In one embodiment, a diameter of the connection column 12 increases from top to bottom.

That is to say, the connection column 12 is not only arranged obliquely, but also is a column with a variable diameter. The diameter at the upper end of the connection column 12 is small, and the diameter at the lower end of the connection column 12 is large. This kind of connection column 12 conforms to its stress characteristics, reduces the material consumption on the premise of ensuring the support stability, and reduces the overall weight of the jacket platform.

In one embodiment, the top of the frame body 1 is provided with a vibration-reducing support 4.

The vibration-reducing support 4 comprises a bottom plate and a plurality of rubber vibration-reducing parts. In this embodiment, eight rubber vibration-reducing parts are arranged. The bottom ends of the rubber vibration-reducing parts are fixed on the bottom plate, and the top ends thereof can be connected to the wind turbine generator unit arranged on the jacket platform. After the vibration-reducing support 4 is arranged, vibration reduction in the vertical direction can be realized, which is generally only used in special situations such as earthquakes. When a strong earthquake occurs, the rubber vibration-reducing parts vibrate along the vertical direction to reduce vibrations and buffer the vibration energy in the vertical direction.

Since the jacket platform is generally affected by sea-current loads in the sea and vibrates in directions in the horizontal plane, the vibration-reducing support 4 is used less frequently. Therefore, in other embodiments, the vibration-reducing support 4 may not be provided.

In one embodiment, the shell 21 is hinged to the top of the frame body 1 by means of a spherical bearing 3.

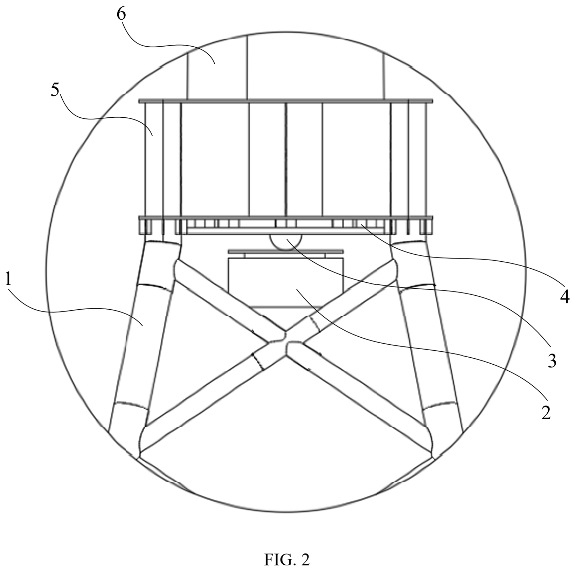

As shown in FIG. 2, the spherical bearing 3 is arranged on the bottom surface of the vibration-reducing support 4, and its shape is approximately hemispherical. After the shell 21 is snap-fitted with the spherical bearing 3 by a snap-fit arrangement, it can rotate around the spherical bearing 3. If conventional connectors such as bolts are used to connect the spherical bearing 3 to the shell 21, the bolts are easy to be rusted by seawater, and it is difficult to disassemble the damping and vibration-reducing device 2 later. The snap-fit connection arrangement will not suffer from rusting, is more suitable for use in the marine environment, has a longer service life, and also facilitates the later disassembling of the damping and vibration-reducing device 2.

According to an embodiment of the present invention, in the second aspect, an offshore wind power structure is also provided, which comprises the above-mentioned jacket platform, an adapter seat 5 and a wind turbine tower 6. The structure of the jacket platform is the same as that of the jacket platform in the above-mentioned embodiments, so it will not be repeated here.

The adapter seat 5 is directly arranged on the top ends of the four connection columns 12 in the jacket platform and is connected to the frame body 1 by bolts. The vibration-reducing support 4 is arranged on the bottom surface of the adapter seat 5. The wind turbine tower 6 is arranged on the adapter seat 5 and connected by a flange on the adapter seat 5. The wind turbine tower 6 is also a structure with a variable diameter, and its diameter increases uniformly from top to bottom.

This kind of jacket platform can effectively reduce vibration, so that the wind turbine tower 6 arranged on it can stand stably in the sea. Moreover, the damping and vibration-reducing device 2 is not directly arranged on the wind turbine tower 6, but is arranged on the top of the frame body 1, which can reduce the center of gravity of the offshore wind power structure.

The vibration-reducing process of the offshore wind power structure provided in this embodiment is described as follows:
When the jacket platform vibrates, the shell 21 will rotate in the corresponding direction around the spherical bearing 3, and after the shell 21 rotates, the damper 22 and the displacement amplification assembly 23 therein will also change their positions accordingly. Since one end of each of the connection cables 24 is fixed by the frame body 1, the other end of each of the connection cables 24 connected to the first gear 231 in the displacement amplification assembly 23 will drive the first gear 231 to rotate. The first gear 231 synchronously drives the second gear 232 to rotate, thus driving the rack 233 to translate, and thus driving the damper 22 to deform, so as to realize buffering and vibration reduction.

In special severe vibration environments such as earthquakes and typhoons, the vibration-reducing support 4 will reduce vibrations in the vertical direction.

Although embodiments of the present invention have been described with reference to the accompanying drawings, various modifications and variations can be made by those skilled in the art without departing from the spirit and scope of the present invention, and such modifications and variations all fall within the scope defined by the appended claims.

## Claims

1. A jacket platform, **characterized by** comprising:
a frame body (1);
a damping and vibration-reducing device (2), wherein the damping and vibration-reducing device (2) comprises a shell (21), a damper (22), a displacement amplification assembly (23) and a connection assembly; the shell (21) is hinged on a top of the frame body (1); the damper (22) and the displacement amplification assembly (23) are arranged in the shell (21), and the damper (22) is connected with a power output end of the displacement amplification assembly (23); the connection assembly comprises a plurality of connection cables (24); one end of each connection cable (24) is connected with a power input end of the displacement amplification assembly (23), and the other end of each connection cable (24) extends out of the shell (21) and is connected to the frame body (1); and every two adjacent connection cables (24) are arranged to have an included angle therebetween.

2. The jacket platform according to claim 1, **characterized in that** the shell (21) is hinged to the top of the frame body (1) by means of a spherical bearing (3).

3. The jacket platform according to claim 2, **characterized in that** the displacement amplification assembly (23) comprises a first gear (231), a second gear (232) and a rack (233); the first gear (231) and the second gear (232) are coaxially connected; the first gear (231) is connected to the connection cables (24); the second gear (232) is meshed with the rack (233); the rack (233) is connected to the damper (22); and a diameter of the first gear (231) is smaller than that of the second gear (232).

4. The jacket platform according to claim 3, **characterized in that** the rack (233) is arranged along a length direction of the shell (21), and axial directions of both the first gear (231) and the second gear (232) are arranged along a height direction of the shell (21).

5. The jacket platform according to claim 4, **characterized in that** the connection assembly comprises four connection cables (24), and the included angle between every two adjacent connection cables (24) is 90°.

6. The jacket platform according to claim 5, **characterized in that** the connection cables (24) are chains.

7. The jacket platform according to claim 1, **characterized in that** the top of the frame body (1) is provided with a vibration-reducing support (4).

8. The jacket platform according to claim 1, **characterized in that** the frame body (1) comprises support piles (11), connection columns (12) and diagonal braces (13); there are four support piles (11) symmetrically arranged on the seabed in pairs; a connection column (12) is arranged on each support pile (11); and a diagonal brace (13) is arranged between every two adjacent connection columns (12).

9. The jacket platform according to claim 8, **characterized in that** a diameter of the connection column (12) increases from top to bottom.

10. An offshore wind power structure, comprising the jacket platform according to any one of claims 1-9, **characterized by** further comprising an adapter seat (5) and a wind turbine tower (6); wherein the adapter seat (5) is arranged on the frame body (1); and the wind turbine tower (6) is arranged on the adapter seat (5).
